**Europäisches Patentamt**

**European Patent Office**

**Office européen des brevets**

(19)

(11) Veröffentlichungsnummer: **0 237 946**
**B1**

(12)

# EUROPÄISCHE PATENTSCHRIFT

(45) Veröffentlichungstag der Patentschrift:
04.10.89

(21) Anmeldenummer: 87103525.9

(22) Anmeldetag: 11.03.87

(51) Int. Cl.⁴: **A01N 37/04**, A01N 37/06,
C08F 8/44

(54) Kupferhaltiges Mittel zur Bekämpfung von Pilzen und Bakterien.

(30) Priorität: 15.03.86 DE 3608681

(43) Veröffentlichungstag der Anmeldung:
23.09.87 Patentblatt 87/39

(45) Bekanntmachung des Hinweises auf die Patenterteilung:
04.10.89 Patentblatt 89/40

(84) Benannte Vertragsstaaten:
AT BE CH DE ES FR GB GR IT LI NL SE

(56) Entgegenhaltungen:
EP-A- 0 039 538
EP-A- 0 039 788
FR-A- 970 321
US-A- 4 175 090
US-A- 4 566 997

**Die Akte enthält technische Angaben, die nach dem
Eingang der Anmeldung eingereicht wurden und die
nicht in dieser Patentschrift enthalten sind.**

(73) Patentinhaber: **BASF Aktiengesellschaft,
Carl-Bosch-Strasse 38, D-6700 Ludwigshafen(DE)**

(72) Erfinder: **Ruppersberger, Karl-Georg,
Karl-Gayer-Strasse 10, D-6719 Weisenheim(DE)**
Erfinder: **Ley, Gregor, Dr., In den Trankstuecken,
D-6719 Wattenheim(DE)**

ACTORUM AG

**Beschreibung**

Die vorliegende Erfindung betrifft ein kupferhaltiges Mittel für den Pflanzenschutz in Form einer wäßrigen Lösung, die eine Polycarbonsäure, Ammoniak und mehr als 1O % (Gew.-%) Kupfer enthält.

Es ist bekannt, ein Mittel zur Bekämpfung von Pilzen und Bakterien zu verwenden, das ein Kupferamminsalz einer Polycarbonsäure enthält, die als Säurebestandteil 6O bis 1OO % Acrylsäure und/oder Methacrylsäure und O bis 4O % Acrylsäureester oder Methacrylsäureester enthält (EP 39 788). Dieses Mittel hat den Nachteil, daß der Kupfergehalt O,O1 bis 1O % beträgt.

Es wurde nun gefunden, daß ein Mittel, das in Form einer wäßrigen Lösung mehr als 1O % Kupfer enthält, infolge der höheren Kupferkonzentration besser zur Bekämpfung von Pilzen und Bakterien geeignet ist als die bekannte Lösung. Die Lösung wird hergestellt, indem man Kupferoxid (CuO) in der wäßrigen Lösung der Polycarbonsäure in Gegenwart von Ammoniak unter Druck und bei erhöhter Temperatur löst. Der Druck beträgt beispielsweise 1,5 bis 1O bar, vorzugsweise 1,5 bis 3 bar. Die Temperatur beträgt beispielsweise 5O bis 11O°C, vorzugsweise 8O bis 1OO°C, insbesondere 9O°C. Die Menge an Ammoniak beträgt mehr als die der Polycarbonsäure äquivalente Menge. Beispielsweise verwendet man 1O % bis 1OO % mehr an Ammoniak als die äquivalente Menge.

Ein Auflösen des in Wasser sehr schwer löslichen CuO in wäßrigen Poly(meth)acrylsäure- oder (Meth)Acrylsäurecopolymer-Lösungen ist bei Raumtemperatur oder bei erhöhten Temperaturen praktisch nicht möglich. Ebenso ist CuO in Ammoniakwasser bei Raumtemperatur oder bei erhöhter Temperatur unter Druck praktisch unlöslich. Auch in wäßrigen Ammoniumpoly(meth)acrylat-Lösungen ist CuO nur schwer löslich. Gibt man aber Ammoniak im Überschuß zu, so kann man CuO in einer den Grundmolen (Meth)Acrylsäure im (Co)Polymeren nahezu äquivalenten Menge auflösen. Das Auflösen des CuO wird durch höhere Ammoniak-Konzentration beschleunigt. Daher arbeitet man zweckmäßig unter erhöhtem Druck. Bei gegebenem Druck wird die Lösegeschwindigkeit mit steigender Temperatur erhöht.

Der Kupfergehalt der neuen Mittel wird durch die Stöchiometrie (je Mol Cu werden mindestens 2 Mol einbasische (Meth)Acrylsäuregruppen benötigt) und durch praktische Gesichtspunkte begrenzt, z.B. eine gut handhabbare Form der Präparate, relativ niedrige Viskosität der flüssigen Präparate und einfaches Ansetzen der Spritzbrühe.

CuO in Mengen deutlich unter der den Grundmolen (Meth)Acrylsäure im (Co)Polymeren äquivalente Menge wird unter den oben geschilderten Reaktionsbedingungen schnell und restlos aufgelöst. Nähert man sich der äquivalenten Menge CuO, so steigt bei sonst konstanten Bedingungen die Restmenge an ungelöstem CuO an und man muß die Reaktionszeit verlängern oder den Löserückstand entfernen. Letzterer sedimentiert zwar - insbesondere bei Verwendung von CuO-Qualitäten mit hohen Schüttgewichten - recht schnell, doch wird für die Praxis wegen der Kosten der Abtrennung des ungelösten CuO von der Lösung eine möglichst vollständige Lösung bei vertretbaren Reaktionszeiten angestrebt.

Der Ammoniakgeruch des Mittels kann nach der Auflösung des CuO deutlich gemindert werden. Für das Auflösen des CuO ist zwar - wie oben ausgeführt - eine erhöhte Ammoniak-Konzentration günstig, doch kann nach dem Auflösen ein Großteil des Ammoniaks z.B. durch Entspannen des Reaktors bei hoher Temperatur oder Dämpfen oder Ausblasen der Lösung z.B. mit Wasserdampf entfernt werden. Dabei kann die in der Lösung verbleibende Ammoniakmenge weit unter jene gedrückt werden, die dem bekannten Cu-Tetrammin--Komplex stöchiometrisch entspricht. Beispielsweise liegt das molare Ammoniak/Cu-Verhältnis beim Auflösen des CuO z.T. erheblich höher (bis zu etwa 6:1) als die theoretisch notwendige Menge (4:1), doch wurden im Endprodukt mit dem oben geschilderten Maßnahmen Ammoniakgehalte unter denen des Diamminkomplexes (2:1) eingestellt, ohne daß Ausfällungen oder dergleichen auftraten. Dabei verändern sich natürlich die Eigenschaften der Mittel. So steigt z.B. die Viskosität der Mittel mit sinkendem Ammoniakgehalt an und das Ansetzen der Spritzbrühe durch Verdünnen mit Wasser erfordert eine bessere Rührung im Ansetzbehälter, während der Geruch der Mittel nach Ammoniak deutlich vermindert wird. Bei der Auflösung des CuO beträgt die Ammoniakmenge beispielsweise Ammoniak:Cu gemessen in Molen 6:1 bis 4:1. Nach dem Auflösen des CuO kann der Ammoniakgehalt in der Lösung gesenkt werden beispielsweise auf Ammoniak:Cu gemessen in Molen 4:1 bis 1,9:1.

Die gute Lagerstabilität der neuen Mittel und das Ausbleiben von festen Ablagerungen bei der Lagerung bei relativ niedrigen Temperaturen sind weitere Vorteile der neuen Mittel.

Auf diese Weise gelingt es, beispielsweise ein Mittel mit einem Gehalt an 15 % Kupfer herzustellen. Der Kupfergehalt der neuen Mittel beträgt mehr als 1O bis 25 %, beispielsweise 11 bis 2O %, vorzugsweise 12 bis 18 %, insbesondere 14 bis 16 %. Die biologische Wirkung des neuen Mittels gegen Pilze und Bakterien ist bei der Anwendung gleicher Kupfermengen genauso gut wie die Wirkung des bekannten Mittels.

Beispiel

In einem Druckkessel (Nenndruck 6 bar) werden 6O kg einer 5O%igen wäßrigen Polyacrylsäure vom K-Wert 25, 15 kg CuO und 6 kg Wasser gut vermischt. Die Luft im Kessel wird durch Evakuieren oder durch Spülen mit Ammoniakgas verdrängt. Dann werden unter Kühlung innerhalb von 3O Minuten 15 kg Ammoniak in den Reaktor gedrückt. Die Reaktorinnentemperatur darf dabei bis maximal 9O°C ansteigen. Nach dem Ende der Ammoniakzugabe hält man weitere 4 Stunden bei 9O°C. Danach wird der Kessel vorsichtig (Aufschäumen) entspannt, auf 5O°C gekühlt, erneut vorsichtig entspannt und kurzzeitig bis auf 26O mbar evakuiert. Danach stellt man durch Zusatz von Wasser (ca. 6 kg) die Lösung auf eine Cu-Konzentration von 15 % ein, kühlt auf 20°C ab und füllt die Lösung ab. Sie hat einen Feststoffgehalt von 46 Gew.-%, eine Dichte bei 20°C von 1,3 g/ml und einen $NH_3$-Gehalt von 12 Gew.-%. Als Wasser wird vollentsalztes Wasser verwendet.

## Patentansprüche

1. Mittel zur Bekämpfung von Pilzen und Bakterien auf der Grundlage einer Lösung eines pflanzenverträglichen Kupferamminsalzes einer Polycarbonsäure mit 60 bis 100 % Acrylsäure oder Methacrylsäure und 0 bis 40 % Acrylsäureester oder Methacrylsäureester in Wasser, dadurch gekennzeichnet, daß die Lösung mehr als 10 % (Gew.-%) Kupfer enthält.

2. Verfahren zur Herstellung einer wäßrigen Lösung eines Kupferaminsalzes einer Polycarbonsäure mit 60 bis 100 % Acrylsäure und/oder Methacrylsäure und 0 bis 40 % Acrylsäureester oder Methacrylsäureester, dadurch gekennzeichnet, daß man Kupferoxid (CuO) in der Polycarbonsäure in Gegenwart von einem Überschuß an Ammoniak in Wasser unter erhöhtem Druck und bei erhöhter Temperatur in einer Menge löst, daß die fertige Lösung mehr als 10 % (Gew.%) Kupfer enthält.

3. Verfahren zur Bekämpfung von Pilzen oder Bakterien, dadurch gekennzeichnet, daß man die Pilze oder Bakterien oder die vor Befall durch Pilze oder Bakterien zu schützenden Pflanzen mit einem Mittel gemäß Anspruch 1 behandelt.

4. Verfahren nach Anspruch 2, dadurch gekennzeichnet, daß man nach dem Ende der Auflösung des Kupferoxids einen Teil des in der Lösung gelösten Ammoniaks aus der Lösung entfernt.

5. Mittel nach Anspruch 1, dadurch gekennzeichnet, daß die Polycarbonsäure ein Homo- oder Copolymerisat von (Meth)Acrylsäure und -estern ist.

6. Mittel nach Anspruch 1, dadurch gekennzeichnet, daß die Polycarbonsäure ein Homo- oder Copolymerisat von (Meth)Acrylsäure ist.

## Claims

1. An agent for controlling fungi and bacteria, based on a solution of a plant-tolerated copper ammine salt of a polycarboxylic acid, containing from 60 to 100% of acrylic acid or methacrylic acid and from 0 to 40% of acrylates or methacrylates, in water, wherein the solution contains more than 10% by weight of copper.

2. A process for the preparation of an aqueous solution of a copper ammine salt of a polycarboxylic acid, containing from 60 to 100% of acrylic acid and/or methacrylic acid and from 0 to 40% of acrylates and/or methacrylates, wherein copper oxide (CuO) is dissolved in the polycarboxylic acid in the presence of an excess of ammonia in water, under superatmospheric pressure and at elevated temperatures, in an amount such that the prepared solution contains more than 10% by weight of copper.

3. A method of controlling fungi or bacteria, wherein the fungi or bacteria or the plants to be protected from infestation from fungi or bacteria are treated with an agent as claimed in claim 1.

4. A process as claimed in claim 2, wherein, when the dissolution of the copper oxide is complete, some of the ammonia dissolved in the solution is removed therefrom.

5. An agent as claimed in claim 1, wherein the polycarboxylic acid is a homopolymer or copolymer of (meth)acrylic acid and (meth)acrylates.

6. An agent as claimed in claim 1, wherein the polycarboxylic acid is a homopolymer or copolymer of (meth)acrylic acid.

## Revendications

1. Agent de lutte contre les champignons et les bactéries, à base d'une solution dans l'eau d'un sel cupriamminé, tolérable pour les plantes, d'un poly(acide carboxylique) à 60 à 100% d'acide acrylique ou acide méthacrylique et 0 à 40% d'ester d'acide acrylique ou d'ester d'acide méthacrylique caractérisé par le fait que la solution contient plus de 10% en poids de cuivre.

2. Procédé de préparation d'une solution aqueuse d'un sel cupriamminé d'un poly(acide carboxylique) à 60 à 100% d'acide acrylique et/ou acide méthacrylique et 0 à 40% d'ester d'acide acrylique ou d'acide méthacrylique, caractérisé par le fait que l'on dissout, à pression élevée et température élevée, de l'oxyde de cuivre (CuO) dans le poly(acide carboxylique), en présence d'un excès d'ammoniac, dans de l'eau, en quantité telle que la solution finie contienne plus de 10% en poids de cuivre.

3. Procédé de lutte contre les champignons et bactéries, caratérisé par le fait que l'on traite les champignons ou les bactéries, ou les plantes, à protéger contre une attaque par champignons ou bactéries, avec un agent selon la revendication 1.

4. Procédé selon la revendication 2, caractérisé par le fait qu'après la fin de la dissolution de l'oxyde de cuivre, on élimine de la solution une partie de l'ammoniac dissous dans la solution.

5. Agent selon la revendication 1, caractérisé par le fait que le poly(acide carboxylique) est un homo- ou copolymérisat d'acide et d'ester (méth)acrylique.

6. Agent selon la revendication 1, caractérisé par le fait que le poly(acide carboxylique) est un homo- ou copolymérisat d'acide (méth)acrylique.